# EUROPEAN PATENT APPLICATION

(11) **EP 1 986 429 A2**
(43) Date of publication of application: **29.10.2008**
(21) Application number: 08004664.2
(22) Date of filing: 13.03.2008
(51) Int. Cl.: H04N 5/76, H04N 5/782

(54) **Video-recording programming apparatus and video-recording programming method**

(30) Priority: 27.04.2007 JP 2007120103
(71) Applicant: Kabushiki Kaisha Toshiba, Minato-ku, Tokyo 105-8001 (JP)
(72) Inventor: Komori, Hiroyuki, Tokyo 105-8001 (JP); Numata, Takehiko, Tokyo 105-8001 (JP)
(74) Representative: HOFFMANN EITLE

(57) **Abstract**

A video-recording programming apparatus includes control means (13), reception means (16), which is controlled by the control means (13), for selecting and receiving a predetermined program, and program presetting memory means (14) capable of storing preset-recording information of a periodically broadcast program. The control means (13) includes video-recording determination means (13A) for determining whether preset-recording of the periodically broadcast program, which is stored in the program presetting memory means (14), has been executed or not, count means (13B) for counting, in a case where the video-recording determination means (13A) determines that the preset-recording of the periodically broadcast program has not been executed, a number of times of non-execution of the preset-recording of the periodically broadcast program, and display control means (13C) for causing display means to display the number of times which is counted by the count means (13B), together with the preset-recording information.

## Description

The present invention relates generally to a video-recording programming apparatus and a video-recording programming method, and more particularly to a video-recording programming apparatus and a video-recording programming method, which can preset recording of a plurality of programs.

In general, a video-recording programming apparatus includes reception means for receiving program data, program presetting memory means which is capable of storing presetting of program recording, a recording medium in which received program data is recorded, and control means for controlling these components.

There is proposed a program presetting memory means which is capable of presetting recording of a periodically broadcast program every time the program is broadcast. In the prior art, there is proposed a program guide-equipped digital broadcast receiver which enables an easy search of serial programs and easy programmed recording of serial programs (Jpn. Pat. Appln. KOKAI Publication No. 2006-115228).

However, if recording of a serial program is preset in the above-described digital broadcast receiver, there may occur such a case that the presetting of recording is not canceled even after the final episode of the serial program is finished and the presetting of recording remains on a video-recording programming table. In such a case, the user is required to manually cancel the presetting, but it is time-consuming to cancel the presetting since it is necessary to confirm past or next-week broadcast programs in order to determine which of programmed recording presettings may be canceled.

The present has been made in consideration of the above-described problems and the object of the invention is to provide a video-recording programming apparatus and a video-recording programming method, which can easily rearrange presetting of program recording by a user, and can present a proper video-recording programming table.

According to a first aspect of the present invention, there is provided a video-recording programming apparatus comprising: control means; reception means, which is controlled by the control means, for selecting and receiving a predetermined program; and program presetting memory means capable of storing preset-recording information of a periodically broadcast program, wherein the control means includes: video-recording determination means for determining whether preset-recording of the periodically broadcast program, which is stored in the program presetting memory means, has been executed or not; number-of-times storing count means for storing, in a case where the video-recording determination means determines that the preset-recording of the periodically broadcast program has not been executed, a number of times of non-execution of the preset-recording of the periodically broadcast program; and display control means for causing display means to display the number of times which is stored in the number-of-times storing means.

According to a second aspect of the present invention, there is provided a video-recording programming method comprising: a video-recording determination step of determining whether preset-recording of a periodically broadcast program, which is stored in program presetting memory means, has been executed or not; a number-of-times storing step of causing, in a case where it is determined that the preset-recording of the periodically broadcast program has not been executed, the program presetting memory means to store a number of times of non-execution of the preset-recording of the periodically broadcast program in association with preset-recording information; and a display control step of causing display means to display the number of times which is stored in the number-of-times storing step.

The present invention can provide a video-recording programming apparatus and a video-recording programming method, which can easily rearrange presetting of program recording by a user, and can present a proper video-recording programming table.

The invention can be more fully understood from the following detailed description when taken in conjunction with the accompanying drawings, in which:
FIG. 1 schematically shows an example of the structure of a video-recording programming apparatus according to a first embodiment of the present invention;
FIG. 2 is a view for explaining an example of the operation of the video-recording programming apparatus according to the first embodiment of the invention;
FIG. 3 is a view for explaining another example of the operation of a video-recording programming apparatus according to a second embodiment of the invention;

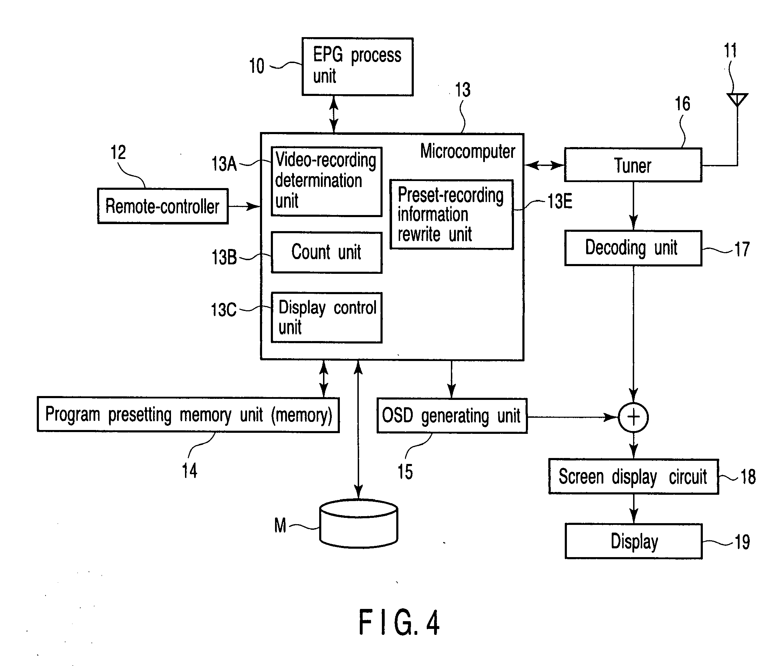

FIG. 4 schematically shows an example of the structure of a video-recording programming apparatus according to a third embodiment of the present invention;
FIG. 5 is a view for explaining an example of the operation of the video-recording programming apparatus according to the third embodiment of the invention;
FIG. 6 is a view for explaining an example of the operation of a video-recording programming apparatus according to a fourth embodiment of the invention;
FIG. 7 is a view for explaining an example of the operation of a video-recording programming apparatus according to a fifth embodiment of the invention;
FIG. 8 is a view for explaining an example of the operation of a video-recording programming apparatus according to a sixth embodiment of the invention;
FIG. 9 is a view for explaining an example of the operation of a video-recording programming apparatus according to a seventh embodiment of the invention;
FIG. 10 is a view for explaining an example of the operation of a video-recording programming apparatus according to an eighth embodiment of the invention;
FIG. 11 is a view for explaining an example of the operation of a video-recording programming apparatus according to a ninth embodiment of the invention;
FIG. 12 is a view for explaining an example of the operation of a video-recording programming apparatus according to a tenth embodiment of the invention;
FIG. 13 is a view for explaining an example of the operation of a video-recording programming apparatus according to an eleventh embodiment of the invention;
FIG. 14 is a view for explaining an example of the operation of a video-recording programming apparatus according to a twelfth embodiment of the invention;
FIG. 15 is a view for explaining an example of the operation of a video-recording programming apparatus according to a thirteenth embodiment of the invention;
FIG. 16 shows an example of display of a video-recording programming table in a conventional video-recording programming apparatus;
FIG. 17 shows a first example of display of a video-recording programming table in the video-recording programming apparatus according to the embodiments;
FIG. 18 shows a second example of display of the video-recording programming table in the video-recording programming apparatus according to the embodiments;
FIG. 19 shows a third example of display of the video-recording programming table in the video-recording programming apparatus according to the embodiments; and
FIG. 20 schematically shows another example of the structure of the video-recording programming apparatus according to the first embodiment of the invention.

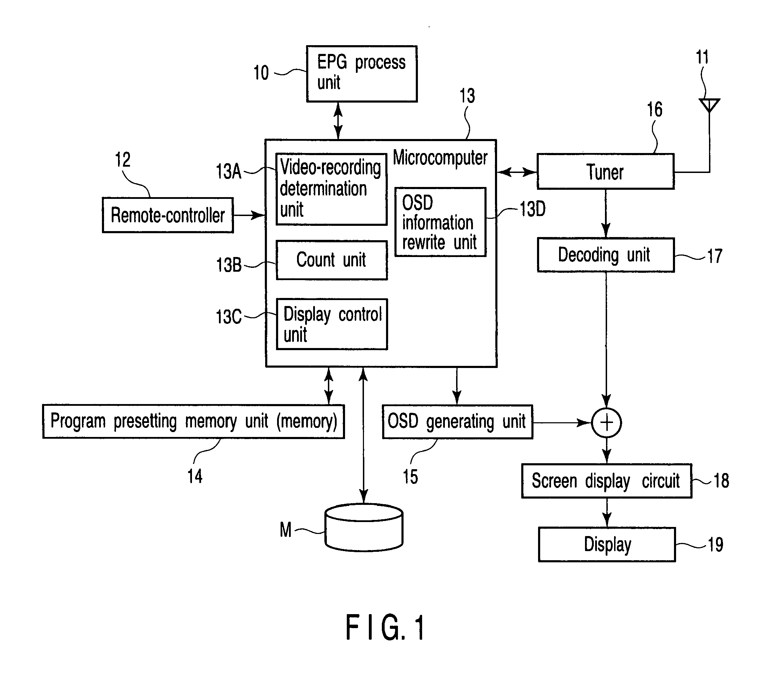

A video-recording programming apparatus and a video-recording programming method according to a first embodiment of the present invention will now be described with reference to the accompanying drawings. As shown in FIG. 1, the video-recording programming apparatus according to this embodiment includes a tuner 16, a decoding unit 17 which decodes a signal that is output from the tuner 16 into a video signal, a program presetting memory unit 14 which is capable of storing presetting of recording of a periodically broadcast program, a microcomputer 13 which controls these components, and a recording medium M in which received program data is recorded.

The tuner 16 selects a predetermined radio wave and receives it from an antenna 11. The tuner 16 converts the radio wave, which is received from the antenna 11, to a signal of a predetermined frequency, and outputs the signal to the microcomputer 13 and the decoding unit 17.

The decoding unit 17 converts the signal, which is received from the tuner 16, to a video signal. The video signal, which is output from the decoding unit 17, is combined with a signal which is output from an OSD generating unit 15, and the combined signal is input to a screen display circuit 18. For example, when a screen display request from a user is input from a remote-controller 12 to the microcomputer 13, the OSD generating unit 15 is controlled by the microcomputer 13 and generates and outputs, for instance, a character display signal and an image display signal.

The screen display circuit 18 converts, for instance, the character display signal and image display signal, which are received from the decoding unit 17 and OSD generating unit 15, to signals that are suited to display on a display 19. Accordingly, the display 19 receives the output signals from the screen display circuit 18 and displays, in combination, the signal received from the antenna 11, such as a TV program signal, and the character display signal generated by the OSD generating unit 15.

The program presetting memory unit 14 stores program presetting information, for example, in accordance with a program presetting request that is issued from the remote-controller 12 to the microcomputer 13. For example, when video-recording presetting is to be made, the microcomputer 13 may acquire a program guide from an EPG process unit 10 and cause the display 19 to display the program guide, thus executing the video-recording presetting.

In a case where recording of a periodically broadcast program is to be preset, the program presetting information, which is stored in the program presetting memory unit 14, includes identification information such as the day of the week of the weekly program, the time of the beginning of the program, the time of the end of the program, and the channel of the program.

On the basis of the program presetting information that is stored in the program presetting memory unit 14, the microcomputer 13 causes the tuner 16 to receive a predetermined radio wave, receives a signal corresponding to the preset program from the tuner 16, and records the received signal in the recording medium M.

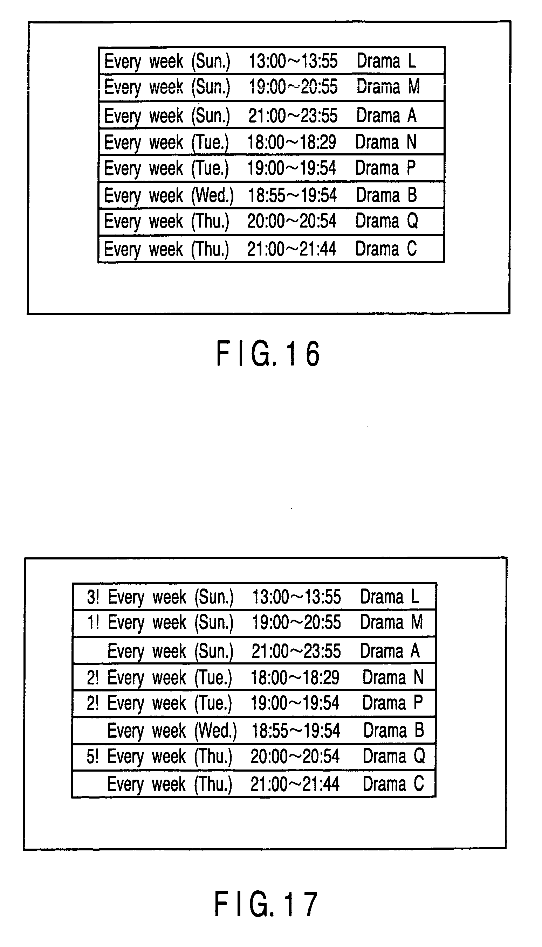

For example, when a preset program table display request is issued from the user by the operation of the remote-controller 12, the microcomputer 13 controls, in the prior art, the OSD generating unit 15 and effects display of a video-recording programming table as shown in FIG. 16. However, preset programs are displayed in a list format as shown in FIG. 16, the user cannot easily determine a program, the final episode of which has already been broadcast, even if such a program is included in the preset program table.

To cope with this problem, the video-recording programming apparatus according to the present embodiment includes means for informing the user of the possibility that the final episode of a periodically broadcast program has already been broadcast in a case where the preset-recording of the periodically broadcast program has not been executed by a predetermined number of times or more.

Specifically, the microcomputer 13 includes a video-recording determination unit 13A which determines whether preset-recording of a periodically broadcast program, which is stored in the program presetting memory unit 14, has been executed or not. The video-recording determination unit 13A determines whether recording has been executed after a predetermined time from a preset time, on the basis of the program presetting information that is stored in the program presetting memory unit 14.

The microcomputer 13 further includes a count unit 13B which counts the number of times of non-execution of recording of a preset program in a case where the video-recording determination unit 13A has determined that the recording of this program has not been executed; a display control unit 13C which causes, in a case where the count value of the count unit 13B is a predetermined number of times or more, the display 19 to display the number of times of non-execution of recording of the preset program, thereby to inform the user of the possibility that the final episode of the program has already been broadcast; and an OSD information rewrite unit 13D which is controlled by the display control unit 13C and rewrites OSD information that is generated by the OSD generating unit 15 in a case where the number of times of non-execution of recording of the program has been updated by the count unit 13B.

Specifically, the OSD generating unit 15 is controlled by the display control unit 13C and generates OSD information as shown in FIG. 17. The program presetting information includes the number of times of non-execution of recording of the program. In the case shown in FIG. 17, the display 19 displays, as the program presetting information, the day of the week on which the preset program is broadcast, the time of broadcast, the title of the program, and the number of times of non-execution of recording of the program in association with the program presetting information. For example, "3" is displayed as the number of times of non-execution of recording of "drama L", and "1" is displayed as the number of times of non-execution of recording of "drama M".

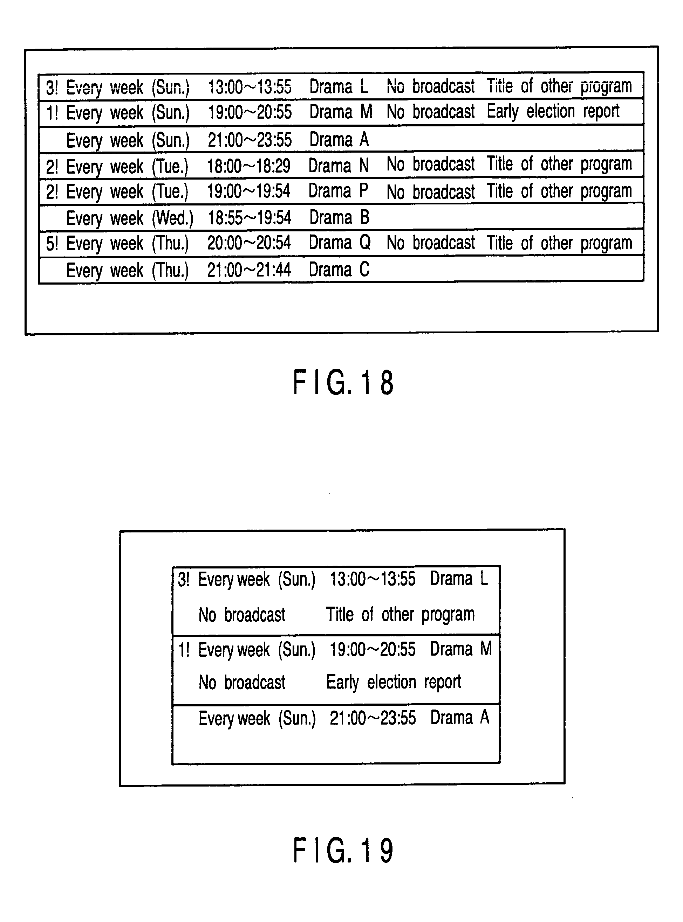

At this time, as regards the program which is not recorded, the display control unit 13C, for example, may acquire from the EPG process unit 10 the reason why the program is not recorded and the title of a program that was actually broadcast at the preset time, and may display them together with the program presetting information as shown in FIG. 18 or FIG. 19.

As has been described above, the embodiment can provide a video-recording programming apparatus which can facilitate rearrangement of preset-recording information by a user, and can present proper preset-recording information by causing the display to display, for instance, the number of times of non-execution of recording of a periodically broadcast program and informing the user of the possibility that the final episode of the periodically broadcast program has already been broadcast.

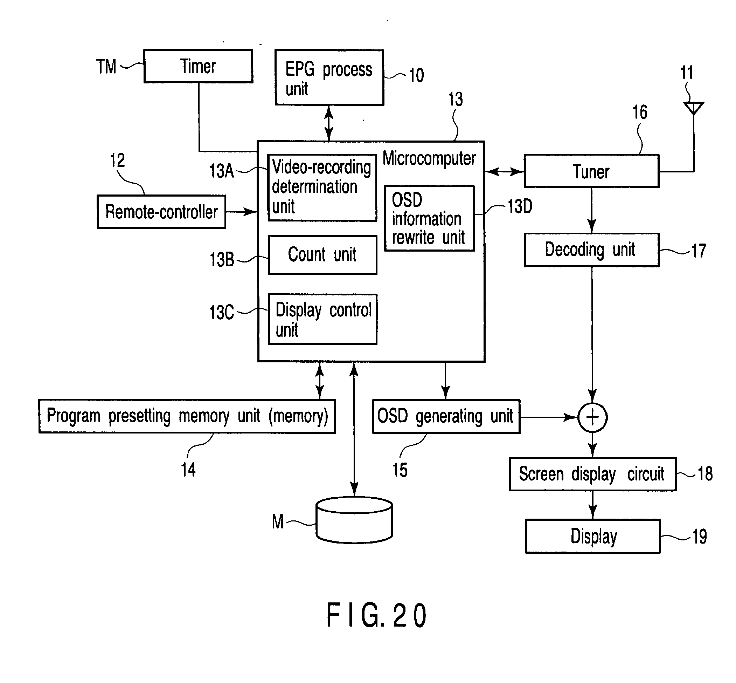

In a case where a digital broadcast signal is received, a timer is needless since time information can be acquired via the antenna 11. However, in a case where an analog broadcast signal is received, a timer TM which is connected to the microcomputer 13 is needed, as shown in FIG. 20.

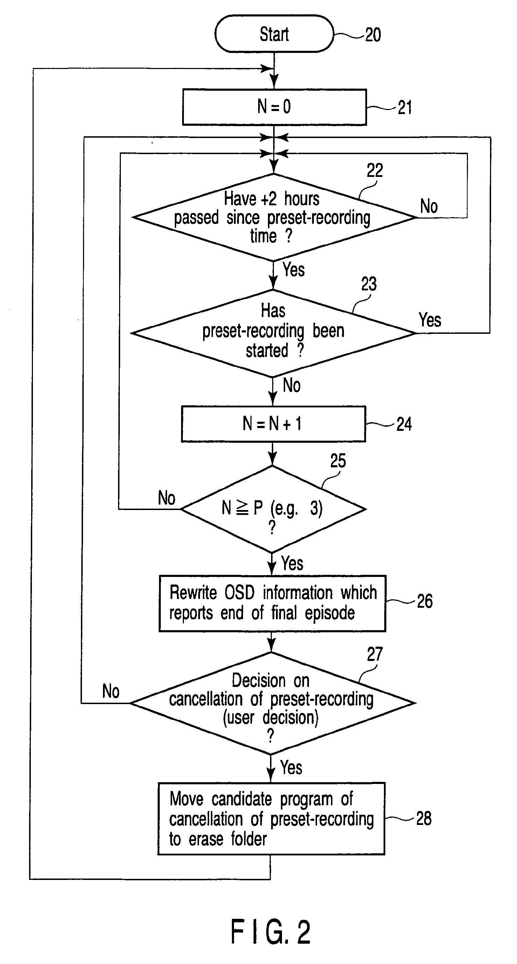

The operation of the above-described video-recording programming apparatus will now be described with reference to the accompanying drawings. As shown in FIG. 2, the microcomputer 13 causes the display 19 to display the possibility that the final episode of a periodically broadcast preset program has been broadcast. Specifically, when the process is started (20), the count unit 13B first sets an initial value of the number of times of non-execution of recording of the program (21). In the case shown in FIG. 2, "0" is set as the initial value of the number N of times of non-execution of recording of the program.

In a case where the video-recording determination unit 13A of the microcomputer 13 determines that a predetermined time has passed since a preset-recording time (22), the video-recording determination unit 13A further determines whether preset-recording of a program has been started (23). In the case shown in FIG. 2, when it is determined that two hours have passed since the preset-recording time, it is determined whether the preset-recording is started or not.

If the video-recording determination unit 13A has determined that the preset recording is started (23), the video-recording determination unit 13A will determine whether the preset-recording of the program is started in the next time (23) when the predetermined time has passed since the preset-recording time (22).

If the video-recording determination unit 13A determines that the preset-recording is not started, the count unit 13B adds "1" to the number N of times of non-execution of recording of the program (24). The video-recording determination unit 13A determines whether the incremented number N of times of non-execution of recording of the program is a predetermined value (P) or more (25). The value P, which is a threshold value of the number of times of non-execution of recording of the program, may be a default value or a value that is settable by the user.

If the number N of times of non-execution of recording of the program is less than the predetermined value (P), the video-recording determination unit 13A will determine whether the preset-recording of the program is started in the next time (23) when the predetermined time has passed since the preset recording time (22).

If the number N of times of non-execution of recording of the program is the predetermined value (P) or more, the OSD information rewrite unit 13D is controlled by the display control unit 13C and causes the OSD generating unit 15 to rewrite OSD information which reports the possibility of the end of the final episode, thereby to inform the user of the possibility that the final episode of the program has already been broadcast (26). For example, in the case shown in FIG. 17, the OSD generating unit 15 rewrites the OSD information so as to update the number of times of non-execution of recording of the program.

The display generating unit 13C may control the OSD generating unit 15 to generate OSD information which effects display of, for example, preset-recording information of a single program and the number of times of non-execution of recording of the single program, thereby informing the user of the possibility of the end of the final episode, or to generate OSD information which effects display of preset-recording information of a plurality of programs and the number of times of non-execution of recording of each of the plural programs, as shown in FIG. 17, thereby informing the user of the possibility of the end of the final episode.

In addition, in the case of effecting the display, as shown in FIG. 17, which informs the user of the possibility of the end of the final episode with respect to the preset-recording information of plural programs, it is possible to display the preset-recording information in different colors in accordance with the number of times of non-execution of recording of the program, or to display an exclamation mark (!) in association with the number of times of non-execution of recording of the program which has not been recorded by the predetermined number of times or more, thereby enabling easy discrimination between a program with a high possibility of the end of the final episode and a program with a low possibility of the end of the final episode.

Furthermore, the display control unit 13C may control the OSD generating unit 15 so as to acquire from the EPG process unit 10 the reason why the preset program is not recorded and the title of a program that was actually broadcast at the preset recording time, and to display them together with the program preset-recording information as shown in FIG. 18 or FIG. 19.

As has been described above, if the OSD information is rewritten, it becomes possible to effect display to inform the user of the possibility of the end of the final episode of the program which has not been recorded by the predetermined number of times or more. As is clear from the comparison between the conventional video-recording programming table shown in FIG. 16 and the video-recording programming table shown in FIG. 17, with the display of the possibility of the end of the final episode, the user can easily determine whether or not to cancel the video-recording presetting on the basis of the information displayed on the display 19.

If a request not to cancel the preset-recording is received from the user (27), the video-recording determination unit 13A will determine whether the preset-recording of the program is started in the next time (23) when the predetermined time has passed since the preset recording time (22).

If a request to cancel the preset-recording is received from the user (27), the microcomputer 13 moves a candidate program that is to be canceled to an erase folder (28). Accordingly, for example, when a request to display the video-recording programming table is issued by the user's operation of the remote-controller 12, it becomes possible to display a proper video-recording programming table which does not include the preset-recording information of the program, the final episode of which has already been broadcast.

As has been described above, as regards a preset program which is periodically broadcast, display is effected to inform the user of the possibility of the end of the final episode of the program. Thereby, the user can easily determine whether the final episode of the program has already been broadcast. Therefore, the present embodiment can provide a video-recording programming apparatus and a video-recording programming method, which can easily rearrange preset-recording information by a user and can present a proper video-recording programming table.

Next, a video-recording programming apparatus and a video-recording programming method according to a second embodiment of the invention are described with reference to the accompanying drawings. In the description below, the parts common to those of the structure of the video-recording programming apparatus according to the above-described first embodiment are denoted by like reference numerals, and a description thereof is omitted.

In the video-recording programming apparatus according to this embodiment, like the video-recording programming apparatus according to the first embodiment, the microcomputer 13 includes the video-recording determination unit 13A. In the microcomputer 13 of the video-recording programming apparatus according to the present second embodiment, if the video-recording determination unit 13A determines that the recording of the periodically broadcast program has not been started, the display control unit 13C effects display to inform the user of the possibility that the final episode of the program has already been broadcast, even if the number N of times of non-starting of recording of the program is even one.

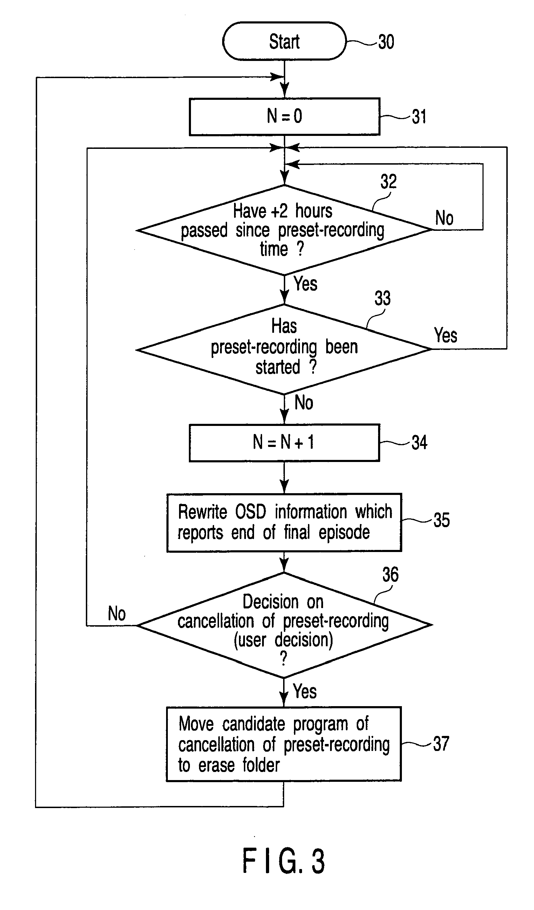

Specifically, in the operation of the video-recording programming apparatus according to the present embodiment, as illustrated in FIG. 3, the count unit 13B first sets an initial value of the number of times of non-execution of recording of the program (31). In the case shown in FIG. 3, "0" is set as the initial value of the number N of times of non-execution of recording of the program.

In a case where the video-recording determination unit 13A of the microcomputer 13 determines that a predetermined time has passed since a preset-recording time (32), the video-recording determination unit 13A further determines whether preset-recording of a program has been started (33). In the case shown in FIG. 3, when it is determined that two hours have passed since the preset recording time, it is determined whether the preset-recording is started.

If the video-recording determination unit 13A determines that the preset recording has been started, the video-recording determination unit 13A will determine whether the preset recording of the program is started in the next time (33) when the predetermined time has passed since the preset recording time (32).

If the video-recording determination unit 13A determines that the preset recording is not started, the count unit 13B adds "1" to the number N of times of non-execution of recording of the program (34). If the number N of times of non-execution of recording of the program is incremented by the count unit 13B, the OSD information rewrite unit 13D is controlled by the display control unit 13C and causes the OSD generating unit 15 to rewrite OSD information which reports the possibility of the end of the final episode, thereby to inform the user of the possibility that the final episode of the program has already been broadcast (35). For example, in the case shown in FIG. 16, the OSD generating unit 15 rewrites the OSD information so as to update the number N of times of non-execution of recording of the program.

If a request not to cancel the preset-recording is received from the user (36), the video-recording determination unit 13A will determine whether the preset-recording of the program is started in the next time (33) when the predetermined time has passed since the preset recording time (32). If a request to cancel the preset-recording is received from the user (36), the microcomputer 13 moves a candidate preset program that is to be canceled to an erase folder (37).

As has been described above, even when the number of times of non-execution of recording of a preset program that is periodically broadcast is one, display is effected to inform the user of the possibility of the end of the final episode of the program. Thereby, the user can easily determine whether the final episode of the program has already been broadcast. Therefore, according to the video-recording programming apparatus and video-recording programming method of the present embodiment, the same advantageous effects as with the video-recording programming apparatus of the first embodiment can be obtained. In particular, according to the video-recording programming apparatus and video-recording programming method of the present embodiment, the video-recording programming table can frequently be updated so that the video-recording programming table may be kept in a proper state.

Next, a video-recording programming apparatus and a video-recording programming method according to a third embodiment of the invention are described with reference to the accompanying drawings. The microcomputer 13 of the video-recording programming apparatus according to this embodiment, like the video-recording programming apparatus according to the first embodiment, includes the video-recording determination unit 13A. In addition, the microcomputer 13 further includes a preset-recording information rewrite unit 13E which rewrites program preset-recording information that is stored in the program presetting memory unit 14 in a case where the number of times of non-execution of recording of a preset program is updated by the count unit 13B. In the description below, the parts common to those of the structure of the video-recording programming apparatus according to the above-described embodiment are denoted by like reference numerals, and a description thereof is omitted.

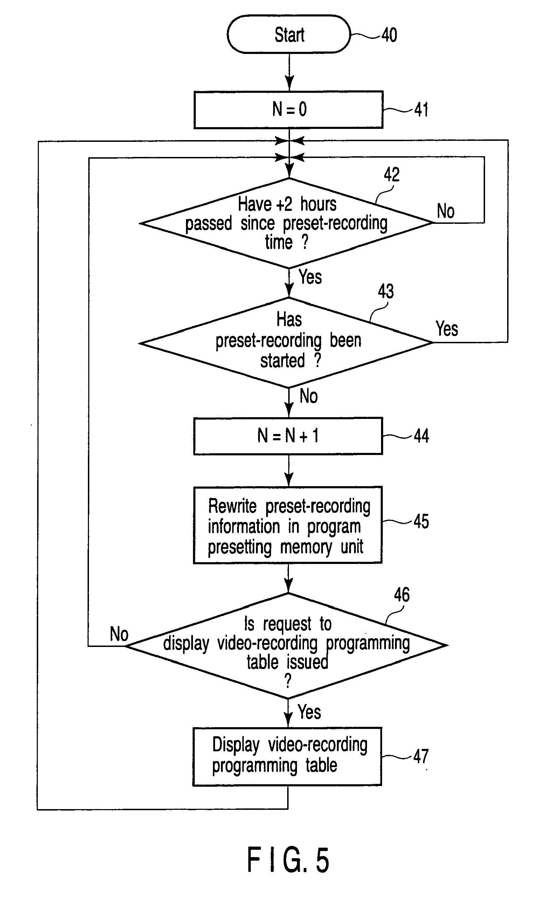

Specifically, in the operation of the video-recording programming apparatus according to the present embodiment, as illustrated in FIG. 5, the count unit 13B first sets an initial value of the number N of times of non-execution of recording of the program (41). In the case shown in FIG. 5, "0" is set as the initial value of the number N of times of non-execution of recording of the program.

In a case where the video-recording determination unit 13A of the microcomputer 13 determines that a predetermined time has passed since a preset-recording time (42), the video-recording determination unit 13A further determines whether preset-recording of a program has been started (43). In the case shown in FIG. 5, when it is determined that two hours have passed since the preset-recording time, it is determined whether the preset-recording is started.

If the video-recording determination unit 13A has determined that the preset-recording is started (43), the video-recording determination unit 13A will determine whether the preset-recording of the program is started in the next time (43) when the predetermined time has passed since the preset-recording time (42).

If the video-recording determination unit 13A determines that the preset-recording is not started (43), the count unit 13B adds "1" to the number N of times of non-execution of recording of the program (44). If the number N of times of non-execution of recording of the program is updated by the count unit 13B, the preset-recording information rewrite unit 13E rewrites program preset-recording information that is stored in the program presetting memory unit 14 (45).

Specifically, in the video-recording programming apparatus according to the present embodiment, the preset-recording information rewrite unit 13E rewrites the program preset-recording information that is stored in the program presetting memory unit 14 so as to add "1" to the number N of times of non-execution of recording of the program, which is included in the program preset-recording information stored in the program presetting memory unit 14.

If the program preset-recording information is rewritten by the preset-recording information rewrite unit 13E, the video-recording determination unit 13A determines whether the recording of the preset program that is periodically broadcast is started, until a request to display the video-recording programming table is received.

If the microcomputer 13 receives the request to display the video-recording programming table, the display control unit 13C controls the OSD generating unit 15 and causes the display 19 to display the video-recording programming table as shown in, for example, FIG. 17 to 19, on the basis of the program preset-recording information stored in the program presetting memory unit 14, thus informing the user of the possibility of the end of the final episode of the program.

As has been described above, as regards a preset program which is periodically broadcast, display is effected to inform the user of the possibility of the end of the final episode of the program. Thereby, the user can easily determine whether the final episode of the program has already been broadcast. Therefore, according to the video-recording programming apparatus and video-recording programming method of the present embodiment, the same advantageous effects as with the video-recording programming apparatus of the first embodiment can be obtained.

Next, a video-recording programming apparatus and a video-recording programming method according to a fourth embodiment of the invention are described with reference to the accompanying drawings. The microcomputer 13 of the video-recording programming apparatus according to this embodiment, like the video-recording programming apparatus according to the above-described third embodiment, includes the preset-recording information rewrite unit 13E.

In the video-recording programming apparatus of the present embodiment, the video-recording determination unit 13A determines whether preset-recording of a program is started at a time point when the video-recording determination unit 13A determines that a predetermined time has passed since a preset-recording start time.

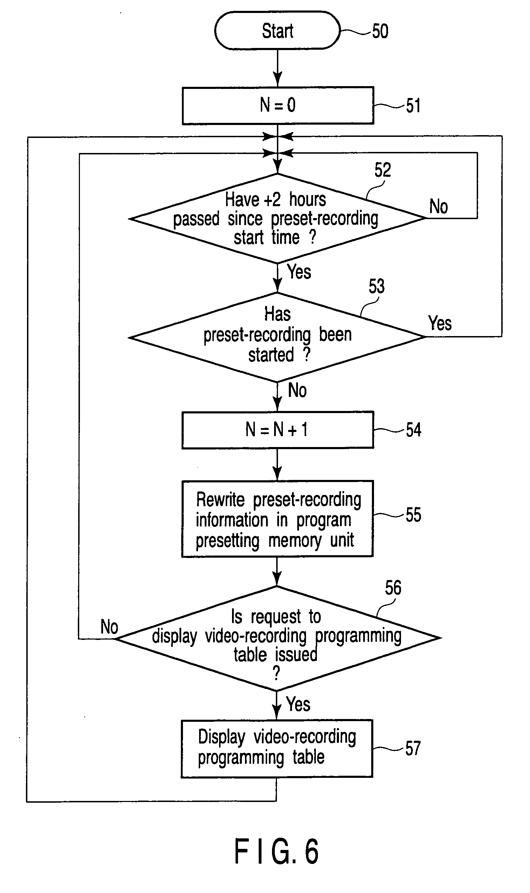

Specifically, in the operation of the video-recording programming apparatus according to the present embodiment, as illustrated in FIG. 6, the count unit 13B first sets an initial value of the number N of times of non-starting of recording of a preset program (51). In the case shown in FIG. 6, "0" is set as the initial value of the number N of times of non-starting of recording of the program.

In a case where the video-recording determination unit 13A of the microcomputer 13 determines that a predetermined time has passed since a preset-recording start time (52), the video-recording determination unit 13A further determines whether preset-recording of the program has been started (53). In the case shown in FIG. 6, when two hours have passed since the preset-recording start time, it is determined whether the preset-recording is started.

If the video-recording determination unit 13A determines that the preset-recording is not started (53), the count unit 13B adds "1" to the number N of times of non-starting of recording of the program (54). If the number N of times of non-starting of recording of the program is updated by the count unit 13B, the preset-recording information rewrite unit 13E rewrites program preset-recording information that is stored in the program presetting memory unit 14 (55).

If the video-recording determination unit 13A has determined that the preset-recording of the program is started (53), the video-recording determination unit 13A will determine whether the preset-recording of the program is started in the next time (53) when the predetermined time has passed since the preset-recording start time (52).

If the program preset-recording information is rewritten by the preset-recording information rewrite unit 13E, the video-recording determination unit 13A determines whether the recording of the preset program that is periodically broadcast is started, until a request to display the video-recording programming table is received.

If the microcomputer 13 receives the request to display the video-recording programming table, the display control unit 13C controls the OSD generating unit 15 to generate OSD information on the basis of the program preset-recording information stored in the program presetting memory unit 14, and causes the display 19 to display the video-recording programming table as shown in, for example, FIG. 17 to 19 (57), thus informing the user of the possibility of the end of the final episode of the program.

As has been described above, as regards a preset program which is periodically broadcast, even in the case where it is determined whether video-recording is started or not when a predetermined time has passed since a preset-recording start time of the program, the same advantageous effects as with the video-recording programming apparatus and video-recording programming method of the first embodiment can be obtained.

Next, a video-recording programming apparatus and a video-recording programming method according to a fifth embodiment of the invention are described with reference to the accompanying drawings. The microcomputer 13 of the video-recording programming apparatus according to this embodiment, like the video-recording programming apparatus according to the above-described third embodiment, includes the preset-recording information rewrite unit 13E.

In the video-recording programming apparatus of the present embodiment, the video-recording determination unit 13A determines whether preset-recording of a program is finished at a time point when the video-recording determination unit 13A determines that a predetermined time has passed since a preset-recording start time.

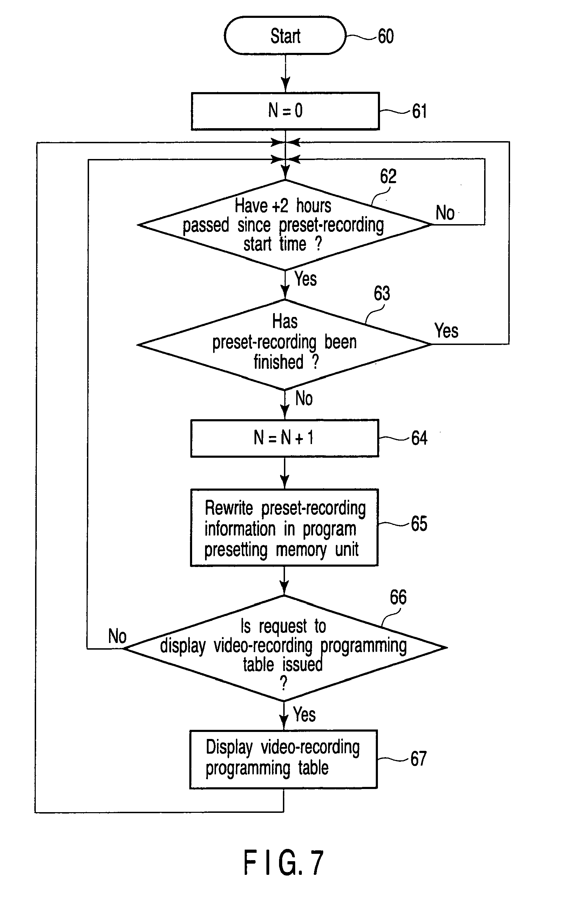

Specifically, in the operation of the video-recording programming apparatus according to the present embodiment, as illustrated in FIG. 7, the count unit 13B first sets an initial value of the number N of times of non-finishing of the recording of a program (61). In the case shown in FIG. 7, "0" is set as the initial value of the number N of times of non-finishing of the recording of the program.

In a case where the video-recording determination unit 13A determines that a predetermined time has passed since a preset-recording start time (62), the video-recording determination unit 13A further determines whether preset-recording of the program is finished (63). In the case shown in FIG. 7, when two hours have passed since the preset-recording start time, it is determined whether the preset-recording is finished.

If the video-recording determination unit 13A determines that the preset-recording is not finished (63), the preset-recording information rewrite unit 13E adds "1" to the number N of times of non-finishing of the recording of the program (64), and rewrites the preset-recording information stored in the program presetting memory unit 14 (65).

If the video-recording determination unit 13A has determined that the preset-recording is finished (63), the video-recording determination unit 13A will determine whether the preset-recording of the program is finished in the next time (63) when the predetermined time has passed since the preset-recording start time (62).

If the program preset-recording information is rewritten by the preset-recording information rewrite unit 13E, the video-recording determination unit 13A determines whether the recording of the preset program that is periodically broadcast is finished, until a request to display the video-recording programming table is received.

If the microcomputer 13 receives the request to display the video-recording programming table (66), the display control unit 13C controls the OSD generating unit 15 to generate OSD information on the basis of the program preset-recording information stored in the program presetting memory unit 14, and causes the display 19 to display the video-recording programming table as shown in, for example, FIG. 17 to 19 (67), thus informing the user of the possibility of the end of the final episode of the program.

As has been described above, as regards a preset program which is periodically broadcast, even in the case where it is determined whether video-recording is finished or not when a predetermined time has passed since a preset-recording start time of the program, the same advantageous effects as with the video-recording programming apparatus and video-recording programming method of the first embodiment can be obtained.

Next, a video-recording programming apparatus and a video-recording programming method according to a sixth embodiment of the invention are described with reference to the accompanying drawings. The microcomputer 13 of the video-recording programming apparatus according to this embodiment, like the video-recording programming apparatus according to the above-described third embodiment, includes the preset-recording information rewrite unit 13E.

In the video-recording programming apparatus of the present embodiment, the video-recording determination unit 13A determines whether preset-recording of a program is started when the video-recording determination unit 13A determines that a predetermined time has passed since a preset-recording end time.

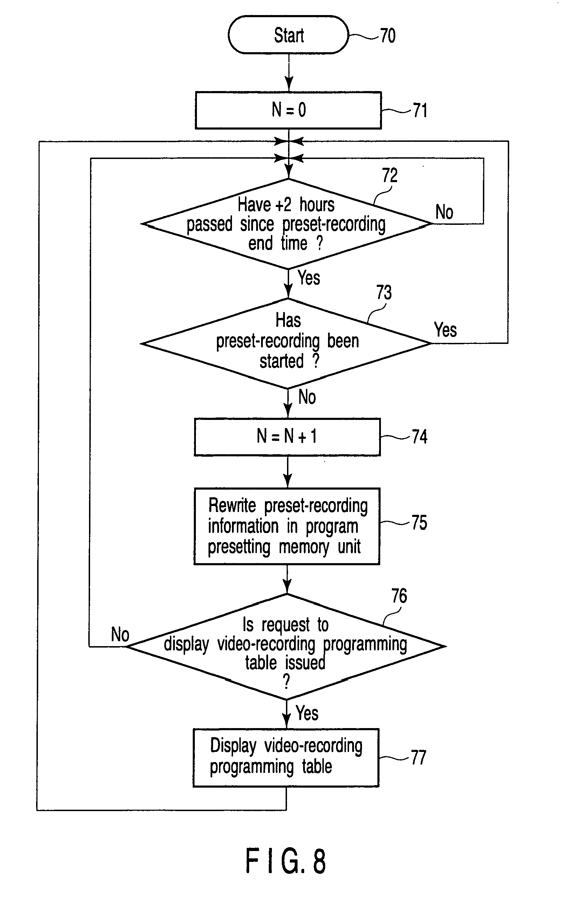

Specifically, in the operation of the video-recording programming apparatus according to the present embodiment, as illustrated in FIG. 8, the count unit 13B first sets an initial value of the number N of times of non-starting of the recording of a preset program (71). In the case shown in FIG. 8, "0" is set as the initial value of the number N of times of non-starting of the recording of the program.

In a case where the video-recording determination unit 13A determines that a predetermined time has passed since a preset-recording end time (72), the video-recording determination unit 13A further determines whether preset-recording of the program has been started (73). In the case shown in FIG. 8, when two hours have passed since the preset-recording end time, it is determined whether the preset-recording is started.

If the video-recording determination unit 13A determines that the preset-recording is not started (73), the count unit 13B adds "1" to the number N of times of non-starting of the recording of the program (74). If the number N of times of non-starting of the recording of the program is updated by the count unit 13B, the preset-recording information rewrite unit 13E rewrites program preset-recording information that is stored in the program presetting memory unit 14 (75).

If the video-recording determination unit 13A has determined that the preset-recording is started (73), the video-recording determination unit 13A will determine whether the preset-recording of the program is started in the next time (73) when the predetermined time has passed since the preset-recording end time (72).

If the program preset-recording information is rewritten by the preset-recording information rewrite unit 13E, the video-recording determination unit 13A determines whether the recording of the preset program that is periodically broadcast is started in the above-described manner, until a request to display the video-recording programming table is received.

If the microcomputer 13 receives the request to display the video-recording programming table, the display control unit 13C controls the OSD generating unit 15 to generate OSD information on the basis of the program preset-recording information that is stored in the program presetting memory unit 14, and causes the display 19 to display the video-recording programming table as shown in, for example, FIG. 17 to 19 (77), thus informing the user of the possibility of the end of the final episode of the program.

As has been described above, as regards a preset program which is periodically broadcast, even in the case where it is determined whether video-recording of a preset program is started or not when a predetermined time has passed since a preset-recording end time of the program, the same advantageous effects as with the video-recording programming apparatus and video-recording programming method of the first embodiment can be obtained. In particular, the video-recording programming apparatus and video-recording programming method of the present embodiment are effective in a case where the broadcast time of the preset program has been delayed.

Next, a video-recording programming apparatus and a video-recording programming method according to a seventh embodiment of the invention are described with reference to the accompanying drawings. The microcomputer 13 of the video-recording programming apparatus according to this embodiment, like the video-recording programming apparatus according to the above-described third embodiment, includes the preset-recording information rewrite unit 13E.

In the video-recording programming apparatus of the present embodiment, the video-recording determination unit 13A determines whether preset-recording of a program is finished when the video-recording determination unit 13A determines that a predetermined time has passed since a preset-recording end time.

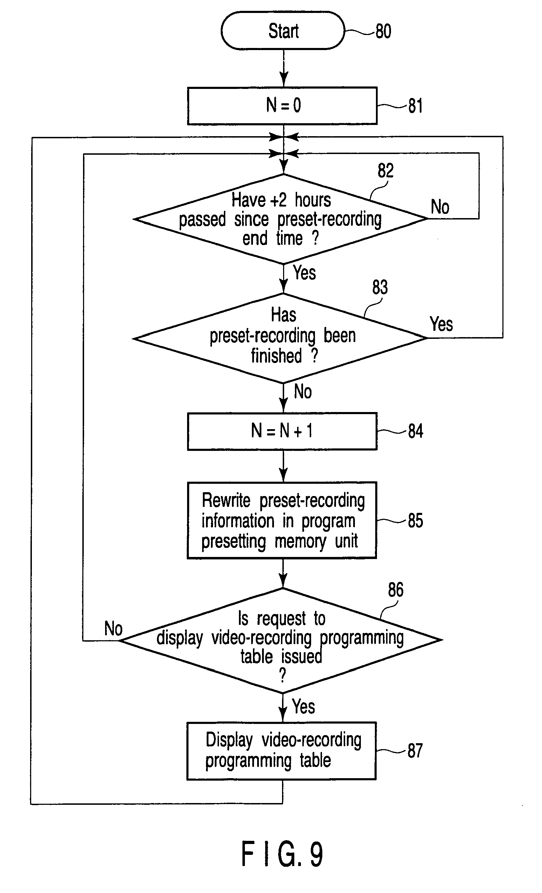

Specifically, in the operation of the video-recording programming apparatus according to the present embodiment, as illustrated in FIG. 9, the count unit 13B first sets an initial value of the number N of times of non-finishing of the recording of a preset program (81). In the case shown in FIG. 9, "0" is set as the initial value of the number N of times of non-finishing of the recording of the program.

In a case where the video-recording determination unit 13A determines that a predetermined time has passed since a preset-recording end time (82), the video-recording determination unit 13A further determines whether preset-recording of the program has been finished (83). In the case shown in FIG. 9, when two hours have passed since the preset-recording end time, it is determined whether the preset-recording is finished.

If the video-recording determination unit 13A determines that the preset-recording is not finished (83), the count unit 13B adds "1" to the number N of times of non-finishing of the recording of the program (84). If the number N of times of non-finishing of the recording of the program is updated by the count unit 13B, the preset-recording information rewrite unit 13E rewrites program preset-recording information that is stored in the program presetting memory unit 14 (85).

If the video-recording determination unit 13A has determined that the preset-recording is finished (83), the video-recording determination unit 13A will determine whether the preset-recording of the program is finished in the next time (83) when the predetermined time has passed since the preset-recording end time (82).

If the program preset-recording information is rewritten by the preset-recording information rewrite unit 13E, the video-recording determination unit 13A determines whether the recording of the preset program that is periodically broadcast is finished in the above-described manner, until a request to display the video-recording programming table is received.

If the microcomputer 13 receives the request to display the video-recording programming table (86), the display control unit 13C controls the OSD generating unit 15 to generate OSD information on the basis of the program preset-recording information that is stored in the program presetting memory unit 14, and causes the display 19 to display the video-recording programming table as shown in, for example, FIG. 17 to 19 (87), thus informing the user of the possibility of the end of the final episode of the program.

As has been described above, as regards a preset program which is periodically broadcast, even in the case where it is determined whether video-recording of a preset program is finished or not when a predetermined time has passed since a preset-recording end time of the program, the same advantageous effects as with the video-recording programming apparatus and video-recording programming method of the first embodiment can be obtained. In particular, the video-recording programming apparatus and video-recording programming method of the present embodiment are effective in a case where the broadcast time of the preset program has been delayed.

Next, a video-recording programming apparatus and a video-recording programming method according to an eighth embodiment of the invention are described with reference to the accompanying drawings. The microcomputer 13 of the video-recording programming apparatus according to this embodiment, like the video-recording programming apparatus according to the above-described third embodiment, includes the preset-recording information rewrite unit 13E.

In the video-recording programming apparatus of the present embodiment, the video-recording determination unit 13A determines whether preset-recording of a program is started or not when the video-recording determination unit 13A determines that a time point that is a predetermined time before a preset-recording start time has been passed.

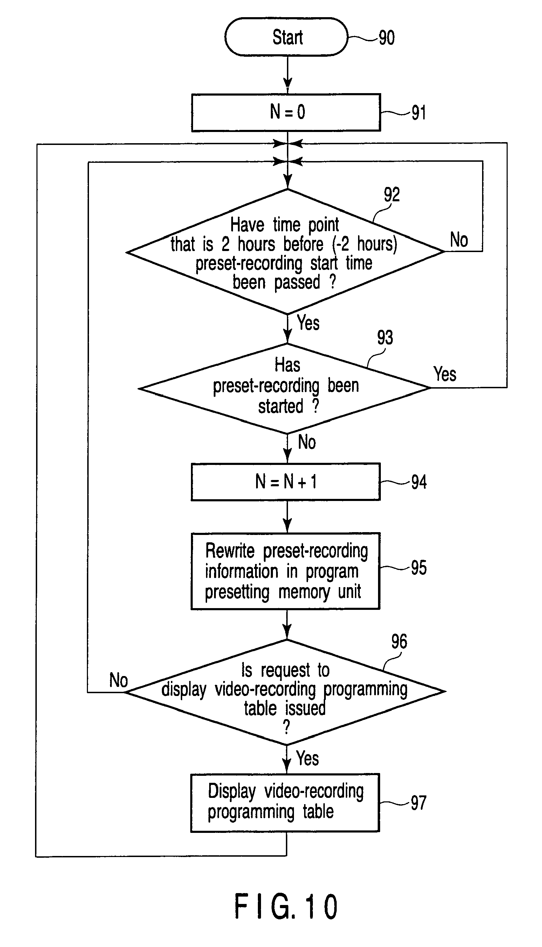

Specifically, in the operation of the video-recording programming apparatus according to the present embodiment, as illustrated in FIG. 10, the count unit 13B first sets an initial value of the number N of times of non-starting of the recording of a preset program (91). In the case shown in FIG. 10, "0" is set as the initial value of the number N of times of non-starting of the recording of the program.

In a case where the video-recording determination unit 13A determines that a time point that is a predetermined time before a preset-recording start time has been passed (92), the video-recording determination unit 13A further determines whether preset-recording of the program has been started (93). In the case shown in FIG. 10, when it is determined that a time point that is two hours before (-2 hours) a preset-recording start time has been passed, it is determined whether the preset-recording is started.

If the video-recording determination unit 13A determines that the preset-recording of the program is not started (93), the count unit 13B adds "1" to the number N of times of non-starting of the recording of the program (94). If the number N of times of non-starting of the recording of the program is updated by the count unit 13B, the preset-recording information rewrite unit 13E rewrites program preset-recording information that is stored in the program presetting memory unit 14 (95).

If the video-recording determination unit 13A has determined that the preset-recording of the program is started (93), the video-recording determination unit 13A will determine whether the preset-recording of the program is started in the next time (93) when the time point that is the predetermined time before the preset-recording start time has been passed (92).

If the program preset-recording information is rewritten by the preset-recording information rewrite unit 13E, the video-recording determination unit 13A determines whether the recording of the preset program that is periodically broadcast is started in the above-described manner, until the microcomputer 13 receives a request to display the video-recording programming table.

If the microcomputer 13 receives the request to display the video-recording programming table (96), the display control unit 13C controls the OSD generating unit 15 to generate OSD information on the basis of the program preset-recording information that is stored in the program presetting memory unit 14, and causes the display 19 to display the video-recording programming table as shown in, for example, FIG. 17 to 19 (97), thus informing the user of the possibility of the end of the final episode of the program.

As has been described above, as regards a preset program which is periodically broadcast, even in the case where it is determined whether video-recording is started or not when it is determined that a time point that is a predetermined time before a preset-recording start time of the program has been passed, the same advantageous effects as with the video-recording programming apparatus and video-recording programming method of the first embodiment can be obtained. In particular, the video-recording programming apparatus and video-recording programming method of the present embodiment are effective in a case where the broadcast time of the preset program is made earlier.

Next, a video-recording programming apparatus and a video-recording programming method according to a ninth embodiment of the invention are described with reference to the accompanying drawings. The microcomputer 13 of the video-recording programming apparatus according to this embodiment, like the video-recording programming apparatus according to the above-described third embodiment, includes the preset-recording information rewrite unit 13E.

In the video-recording programming apparatus of the present embodiment, the video-recording determination unit 13A determines whether preset-recording of a program is finished or not when the video-recording determination unit 13A determines that a time point that is a predetermined time before a preset-recording start time has been passed.

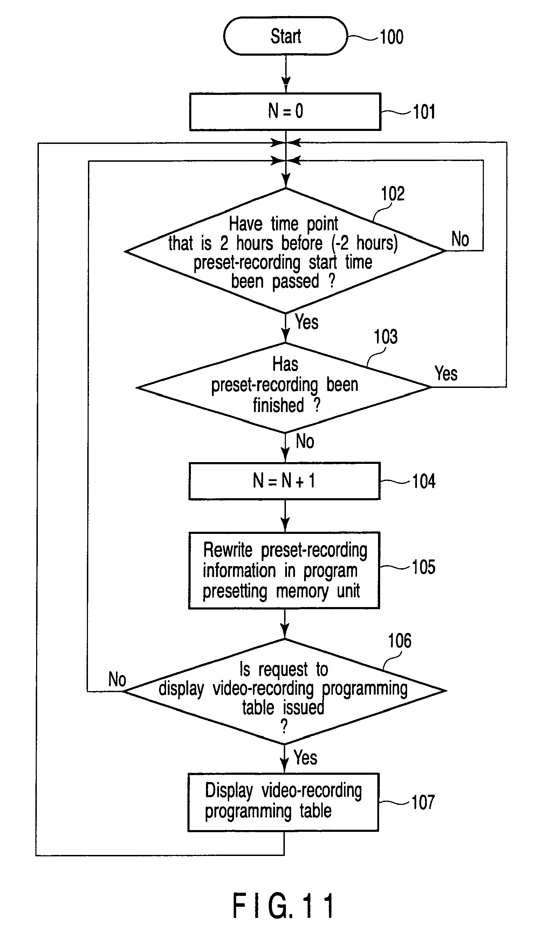

Specifically, in the operation of the video-recording programming apparatus according to the present embodiment, as illustrated in FIG. 11, the count unit 13B first sets an initial value of the number N of times of non-finishing of the recording of a preset program (101). In the case shown in FIG. 11, "0" is set as the initial value of the number N of times of non-finishing of the recording of the preset program.

In a case where the video-recording determination unit 13A determines that a time point that is a predetermined time before a preset-recording start time has been passed (102), the video-recording determination unit 13A further determines whether preset-recording of the program has been finished (103). In the case shown in FIG. 11, when it is determined that a time point that is two hours before a preset-recording start time has been passed, it is determined whether the preset-recording is finished.

If the video-recording determination unit 13A determines that the preset-recording of the program is not finished (103), the count unit 13B adds "1" to the number N of times of non-finishing of the recording of the program (104). If the number N of times of non-finishing of the recording of the program is updated by the count unit 13B, the preset-recording information rewrite unit 13E rewrites program preset-recording information that is stored in the program presetting memory unit 14 (105).

If the video-recording determination unit 13A has determined that the preset-recording of the program is finished (103), the video-recording determination unit 13A will determine whether the preset-recording of the program is finished in the next time (103) when the time point that is the predetermined time before the preset-recording start time has been passed (102).

If the program preset-recording information is rewritten by the preset-recording information rewrite unit 13E, the video-recording determination unit 13A determines whether the recording of the preset program that is periodically broadcast is finished in the above-described manner, until the microcomputer 13 receives a request to display the video-recording programming table.

If the microcomputer 13 receives the request to display the video-recording programming table (106), the display control unit 13C controls the OSD generating unit 15 to generate OSD information on the basis of the program preset-recording information that is stored in the program presetting memory unit 14, and causes the display 19 to display the video-recording programming table as shown in, for example, FIG. 17 to 19 (107), thus informing the user of the possibility of the end of the final episode of the program.

As has been described above, as regards a preset program which is periodically broadcast, even in the case where it is determined whether video-recording is finished or not when a time point that is a predetermined time before a preset-recording start time of the program has been passed, the same advantageous effects as with the video-recording programming apparatus and video-recording programming method of the first embodiment can be obtained. In particular, the video-recording programming apparatus and video-recording programming method of the present embodiment are effective in a case where the broadcast time of the preset program is made earlier.

Next, a video-recording programming apparatus and a video-recording programming method according to a tenth embodiment of the invention are described with reference to the accompanying drawings. The microcomputer 13 of the video-recording programming apparatus according to this embodiment, like the video-recording programming apparatus according to the above-described third embodiment, includes the preset-recording information rewrite unit 13E.

In the video-recording programming apparatus of the present embodiment, the video-recording determination unit 13A determines whether preset-recording of a program is started or not when the video-recording determination unit 13A determines that a time point that is a predetermined time before a preset-recording end time has been passed.

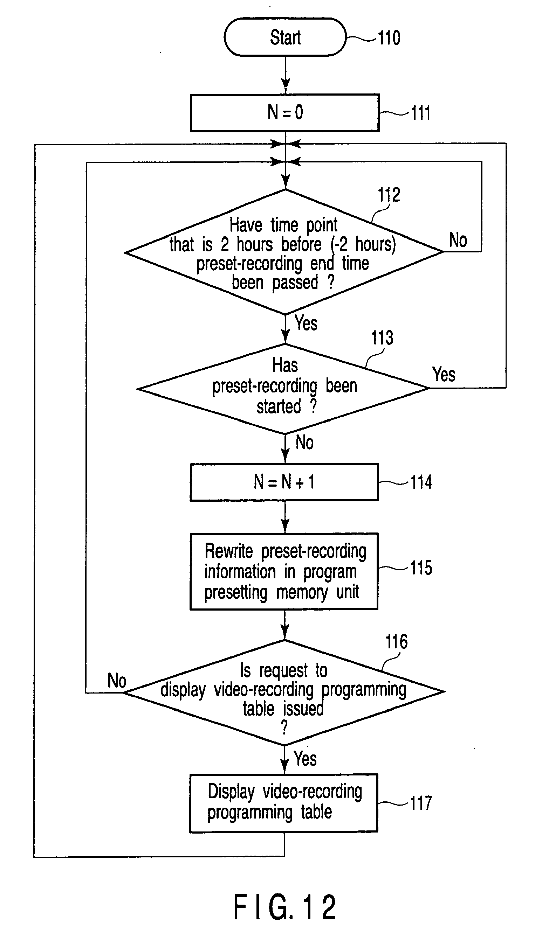

Specifically, in the operation of the video-recording programming apparatus according to the present embodiment, as illustrated in FIG. 12, the count unit 13B first sets an initial value of the number N of times of non-starting of the recording of a preset program (111). In the case shown in FIG. 12, "0" is set as the initial value of the number N of times of non-starting of the recording of the program.

In a case where the video-recording determination unit 13A determines that a time point that is a predetermined time before a preset-recording end time has been passed (112), the video-recording determination unit 13A further determines whether preset-recording of the program has been started (113). In the case shown in FIG. 12, when it is determined that a time point that is two hours before a preset-recording end time has been passed, it is determined whether the preset-recording is started.

If the video-recording determination unit 13A determines that the preset-recording of the program is not started (113), the count unit 13B adds "1" to the number N of times of non-starting of the recording of the program (114). If the number N of times of non-starting of the recording of the program is updated by the count unit 13B, the preset-recording information rewrite unit 13E rewrites program preset-recording information that is stored in the program presetting memory unit 14 (115).

If the video-recording determination unit 13A has determined that the preset-recording of the program is started (113), the video-recording determination unit 13A will determine whether the preset-recording of the program is started in the next time (113) when the time point that is the predetermined time before the preset-recording end time has been passed (112).

If the program preset-recording information is rewritten by the preset-recording information rewrite unit 13E, the video-recording determination unit 13A determines whether the recording of the preset program that is periodically broadcast is started or not in the above-described manner, until the microcomputer 13 receives a request to display the video-recording programming table.

If the microcomputer 13 receives the request to display the video-recording programming table (116), the display control unit 13C controls the OSD generating unit 15 to generate OSD information on the basis of the program preset-recording information that is stored in the program presetting memory unit 14, and causes the display 19 to display the video-recording programming table as shown in, for example, FIG. 17 to 19 (117), thus informing the user of the possibility of the end of the final episode of the program.

As has been described above, as regards a preset program which is periodically broadcast, even in the case where it is determined whether video-recording is started or not when it is determined that a time point that is a predetermined time before a preset-recording end time of the program has been passed, the same advantageous effects as with the video-recording programming apparatus and video-recording programming method of the first embodiment can be obtained.

Next, a video-recording programming apparatus and a video-recording programming method according to an eleventh embodiment of the invention are described with reference to the accompanying drawings. The microcomputer 13 of the video-recording programming apparatus according to this embodiment, like the video-recording programming apparatus according to the above-described third embodiment, includes the preset-recording information rewrite unit 13E.

In the video-recording programming apparatus of the present embodiment, the video-recording determination unit 13A determines whether preset-recording of a program is finished or not when the video-recording determination unit 13A determines that a time point that is a predetermined time before a preset-recording end time has been passed.

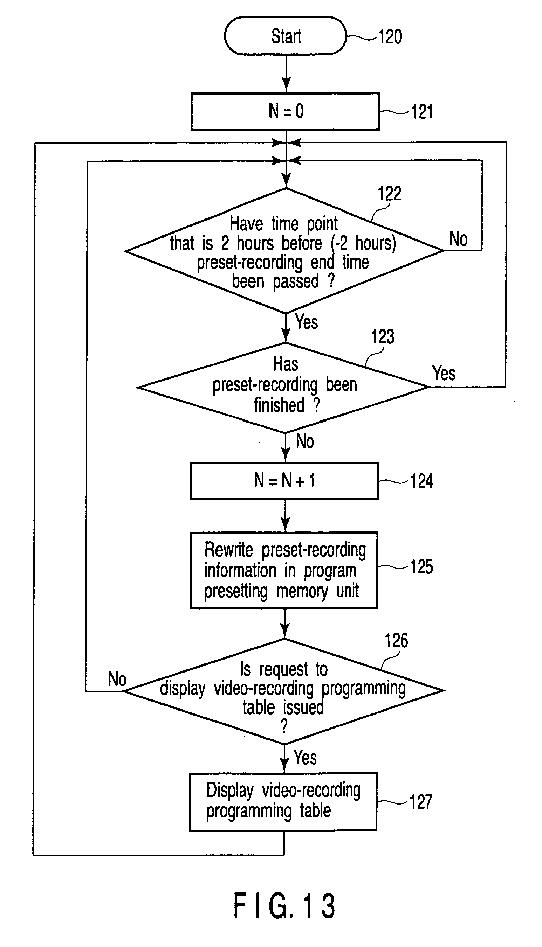

Specifically, in the operation of the video-recording programming apparatus according to the present embodiment, as illustrated in FIG. 13, the count unit 13B first sets an initial value of the number N of times of non-finishing of the recording of a preset program (121). In the case shown in FIG. 13, "0" is set as the initial value of the number N of times of non-finishing of the recording of the program.

In a case where the video-recording determination unit 13A determines that a time point that is a predetermined time before a preset-recording end time has been passed (122), the video-recording determination unit 13A further determines whether preset-recording of the program has been finished (123). In the case shown in FIG. 13, when it is determined that a time point that is two hours before a preset-recording end time has been passed, it is determined whether the preset-recording is finished.

If the video-recording determination unit 13A determines that the preset-recording of the program is not finished (123), the count unit 13B adds "1" to the number N of times of non-finishing of the recording of the program (124). If the number N of times of non-finishing of the recording of the program is updated by the count unit 13B, the preset-recording information rewrite unit 13E rewrites program preset-recording information that is stored in the program presetting memory unit 14 (125).

If the video-recording determination unit 13A has determined that the preset-recording of the program is finished (123), the video-recording determination unit 13A will determine whether the preset-recording of the program is finished in the next time (123) when the time point that is the predetermined time before the preset-recording end time has been passed (122).

If the program preset-recording information is rewritten by the preset-recording information rewrite unit 13E, the video-recording determination unit 13A determines whether the recording of the preset program that is periodically broadcast is finished or not in the above-described manner, until the microcomputer 13 receives a request to display the video-recording programming table.

If the microcomputer 13 receives the request to display the video-recording programming table (126), the display control unit 13C controls the OSD generating unit 15 to generate OSD information on the basis of the program preset-recording information that is stored in the program presetting memory unit 14, and causes the display 19 to display the video-recording programming table as shown in, for example, FIG. 17 to 19 (127), thus informing the user of the possibility of the end of the final episode of the program.

As has been described above, as regards a preset program which is periodically broadcast, even in the case where it is determined whether video-recording is finished or not when a time point that is a predetermined time before a preset-recording end time of the program has been passed, the same advantageous effects as with the video-recording programming apparatus and video-recording programming method of the first embodiment can be obtained.

Next, a video-recording programming apparatus and a video-recording programming method according to a twelfth embodiment of the invention are described with reference to the accompanying drawings. The microcomputer 13 of the video-recording programming apparatus according to this embodiment, like the video-recording programming apparatus according to the above-described third embodiment, includes the preset-recording information rewrite unit 13E.

In the video-recording programming apparatus of the present embodiment, the video-recording determination unit 13A determines whether preset-recording of a program is started when the video-recording determination unit 13A determines that a preset-recording start time has been passed.

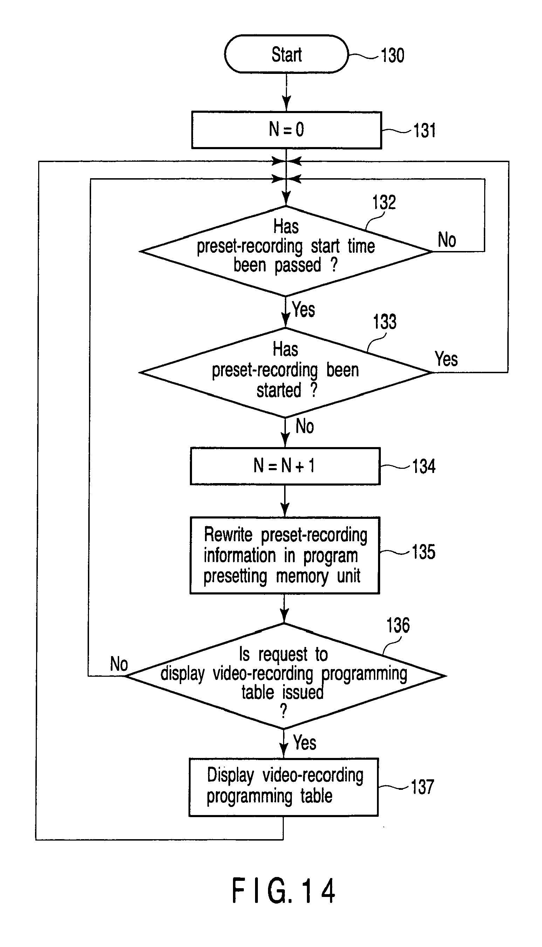

Specifically, in the operation of the video-recording programming apparatus according to the present embodiment, as illustrated in FIG. 14, the count unit 13B first sets an initial value of the number N of times of non-starting of the recording of a preset program (131). In the case shown in FIG. 14, "0" is set as the initial value of the number N of times of non-starting of the recording of the program.

In a case where the video-recording determination unit 13A determines that a preset-recording start time has been passed (132), the video-recording determination unit 13A further determines whether preset-recording of the program has been started (133). At this time, if the video-recording determination unit 13A determines that the preset-recording is not started (133), the count unit 13B adds "1" to the number N of times of non-starting of the recording of the program (134). If the number N of times of non-starting of the recording of the program is updated by the count unit 13B, the preset-recording information rewrite unit 13E rewrites program preset-recording information that is stored in the program presetting memory unit 14 (145).

If the video-recording determination unit 13A has determined that the preset-recording is started (133), the video-recording determination unit 13A will determine whether the preset-recording of the program is started in the next time (133) when the preset-recording start time has been passed (132).

If the program preset-recording information is rewritten by the preset-recording information rewrite unit 13E, the video-recording determination unit 13A determines whether the recording of the preset program that is periodically broadcast is started or not in the above-described manner, until the microcomputer 13 receives a request to display the video-recording programming table.

If the microcomputer 13 receives the request to display the video-recording programming table (136), the display control unit 13C controls the OSD generating unit 15 to generate OSD information on the basis of the program preset-recording information stored in the program presetting memory unit 14, and causes the display 19 to display the video-recording programming table as shown in, for example, FIG. 17 to 19 (137), thus informing the user of the possibility of the end of the final episode of the program.

As has been described above, as regards a preset program which is periodically broadcast, even in the case where it is determined whether video-recording is started or not when it is determined that a preset-recording start time of the program has been passed, the same advantageous effects as with the video-recording programming apparatus and video-recording programming method of the first embodiment can be obtained.

Next, a video-recording programming apparatus and a video-recording programming method according to a thirteenth embodiment of the invention are described with reference to the accompanying drawings. The microcomputer 13 of the video-recording programming apparatus according to this embodiment, like the video-recording programming apparatus according to the above-described third embodiment, includes the preset-recording information rewrite unit 13E.

In the video-recording programming apparatus of the present embodiment, the video-recording determination unit 13A determines whether preset-recording of a program is finished when the video-recording determination unit 13A determines that a preset-recording end time has been passed.

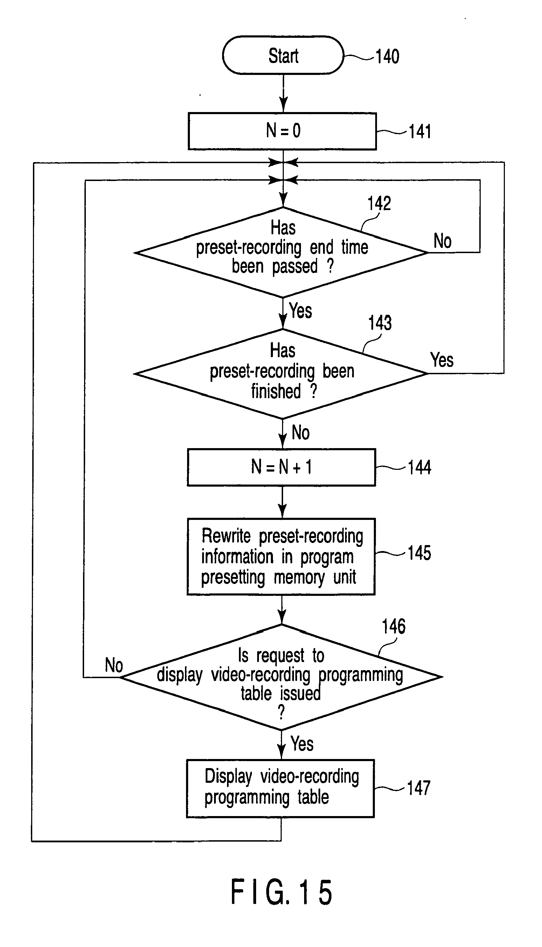

Specifically, in the operation of the video-recording programming apparatus according to the present embodiment, as illustrated in FIG. 15, the count unit 13B first sets an initial value of the number N of times of non-finishing of the recording of a preset program (141). In the case shown in FIG. 15, "0" is set as the initial value of the number N of times of non-finishing of the recording of the program.

In a case where the video-recording determination unit 13A determines that a preset-recording end time has been passed (142), the video-recording determination unit 13A further determines whether preset-recording of the program has been finished (143). At this time, if the video-recording determination unit 13A determines that the preset-recording is not finished (143), the count unit 13B adds "1" to the number N of times of non-finishing of the recording of the program (144). If the number N of times of non-finishing of the recording of the program is updated by the count unit 13B, the preset-recording information rewrite unit 13E rewrites program preset-recording information that is stored in the program presetting memory unit 14 (145).

If the video-recording determination unit 13A determines that the preset-recording has been finished (143), the video-recording determination unit 13A will determine whether the preset-recording of the program is finished in the next time (143) when the preset-recording end time has been passed (142).

If the program preset-recording information is rewritten by the preset-recording information rewrite unit 13E, the video-recording determination unit 13A determines whether the recording of the preset program that is periodically broadcast is finished or not in the above-described manner, until the microcomputer 13 receives a request to display the video-recording programming table.

If the microcomputer 13 receives the request to display the video-recording programming table (146), the display control unit 13C controls the OSD generating unit 15 to generate OSD information on the basis of the program preset-recording information stored in the program presetting memory unit 14, and causes the display 19 to display the video-recording programming table as shown in, for example, FIG. 17 to 19 (147), thus informing the user of the possibility of the end of the final episode of the program.

As has been described above, as regards a preset program which is periodically broadcast, even in the case where it is determined whether video-recording is finished or not when it is determined that a preset-recording end time of the program has been passed, the same advantageous effects as with the video-recording programming apparatus and video-recording programming method of the first embodiment can be obtained.

The present invention is not limited directly to the above-described embodiments. In practice, the structural elements can be modified without departing from the spirit of the invention. For example, each of the above-described video-recording programming apparatus includes the display 19. Alternatively, display may be effected on an externally connected display, thereby to inform the user of the possibility of the end of the final episode of the preset program. In this case, too, the same advantageous effects as with the above-described video-recording programming apparatus can be obtained.

Furthermore, various inventions can be made by properly combining the structural elements disclosed in the embodiments. For example, some structural elements may be omitted from all the structural elements disclosed in the embodiments. Furthermore, structural elements in different embodiments may properly be combined. For example, since the video-recording programming apparatus according to the above-described third to thirteenth embodiments have the same structure, some of the video-recording programming methods relating to these embodiments may be combined to realize more exact determination as to whether programmed recording has been executed or not.

## Claims

1. A video-recording programming apparatus **characterized by** comprising:
control means (13);
reception means (16), which is controlled by the control means (13), for selecting and receiving a predetermined program; and
program presetting memory means (14) capable of storing preset-recording information of a periodically broadcast program,
wherein the control means (13) includes:
video-recording determination means (13A) for determining whether preset-recording of the periodically broadcast program, which is stored in the program presetting memory means (14), has been executed or not;
count means (13B) for counting, in a case where the video-recording determination means (13A) determines that the preset-recording of the periodically broadcast program has not been executed, a number of times of non-execution of the preset-recording of the periodically broadcast program; and
display control means (13C) for causing display means to display the number of times which is counted by the count means (13B), together with the preset-recording information.

2. The video-recording programming apparatus according to claim 1, **characterized in that** the preset-recording information includes the number of times of non-execution of the preset-recording of the program, and
the control means (13) further includes preset-recording information rewrite means for causing the program presetting memory means (14) to store the number of times that is counted by the count means (13B), in a case where the video-recording determination means (13A) determines that the preset-recording of the periodically broadcast program has not been executed.

3. The video-recording programming apparatus according to claim 1, **characterized by** further comprising said display means (15, 18, 19).

4. The video-recording programming apparatus according to claim 3, **characterized in that** the display means (15, 18, 19) includes an OSD generating unit (15) which generates OSD information, and
the control means (13) further includes OSD information rewrite means (13D) for rewriting the OSD information, thereby to cause the display means to display the number of times that is counted by the count means (13B).

5. The video-recording programming apparatus according to claim 1, **characterized in that** the display control means (13) includes program title display means for acquiring, in a case where the video-recording determination means (13A) determines that the preset-recording of the periodically broadcast program has not been executed, a title of a program, which has actually been broadcast at a preset-recording time, from electronic program guide information, and causing the display means (15, 18, 19) to display the acquired title of the program.

6. The video-recording programming apparatus according to claim 1, **characterized in that** the display control means (13) includes reason display means for effecting display of the number of times that is counted by the count means (13B) and a reason for non-execution of the preset-recording, in a case where the video-recording determination means (13A) determines that the preset-recording of the periodically broadcast program has not been executed.

7. The video-recording programming apparatus according to claim 1, **characterized in that** the display control means (13) is means for causing the display means (15, 18, 19) to display the preset-recording information, thereby to make the preset-recording information distinguishable by the number of times that is counted by the count means (13B).

8. The video-recording programming apparatus according to claim 1, **characterized in that** the control means (13) further includes means for determining an end of the periodically broadcast program in a case where the preset-recording of the periodically broadcast program has not been executed by a predetermined number of times, and deleting the preset-recording information.

9. The video-recording programming apparatus according to claim 1, **characterized in that** the video-recording determination means (13A) is means for determining whether a time point, which is a predetermined time after or a predetermined time before a preset-recording start time of the periodically broadcast program, has been passed, and determining, if the time point which is the predetermined time after or the predetermined time before the preset-recording start time, has been passed, whether the preset-recording has been executed.

10. The video-recording programming apparatus according to claim 1, **characterized in that** the video-recording determination means (13A) is means for determining whether a time point, which is a predetermined time after or a predetermined time before a preset-recording end time of the periodically broadcast program, has been passed, and determining, if the time point which is the predetermined time after or the predetermined time before the preset-recording end time, has been passed, whether the preset-recording has been executed.

11. The video-recording programming apparatus according to claim 1, **characterized in that** the video-recording determination means (13A) is means for determining whether the preset-recording of the periodically broadcast program has been executed, on the basis of whether the preset-recording of the periodically broadcast program has been started or finished.

12. A video-recording programming method **characterized by** comprising:
a video-recording determination step (23) of determining whether preset-recording of a periodically broadcast program, which is stored in program presetting memory means, has been executed or not;
a count step (24) of counting, in a case where it is determined that the preset-recording of the periodically broadcast program has not been executed, a number of times of non-execution of the preset-recording of the periodically broadcast program in association with preset-recording information; and
a display control step (26) of causing display means to display the number of times which is counted by the count step (24).
